(19) Europäisches Patentamt / European Patent Office / Office européen des brevets

(11) **EP 4 685 259 A1**

(12) **EUROPEAN PATENT APPLICATION**
published in accordance with Art. 153(4) EPC

(43) Date of publication:
**28.01.2026  Bulletin 2026/05**

(21) Application number: **24788400.0**

(22) Date of filing: **08.02.2024**

(51) International Patent Classification (IPC):
**C22C 38/00** (2006.01)   **C21D 8/12** (2026.01)
**C21D 9/46** (2006.01)   **C22C 38/14** (2006.01)
**C22C 38/60** (2006.01)   **H01F 1/147** (2006.01)
**H02K 1/02** (2006.01)

(52) Cooperative Patent Classification (CPC):
**C21D 8/12; C21D 9/46; C22C 38/00; C22C 38/14;
C22C 38/60; H01F 1/147; H02K 1/02**

(86) International application number:
**PCT/JP2024/004239**

(87) International publication number:
**WO 2024/214370 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.04.2023  JP 2023065493**

(71) Applicant: **JFE Steel Corporation
Tokyo, 100-0011 (JP)**

(72) Inventors:
• **SUEHIRO, Ryuichi
Tokyo 100-0011 (JP)**
• **OKUBO, Tomoyuki
Tokyo 100-0011 (JP)**
• **ZAIZEN, Yoshiaki
Tokyo 100-0011 (JP)**
• **SAITO, Hayato
Tokyo 100-0011 (JP)**

(74) Representative: **Hoffmann Eitle
Patent- und Rechtsanwälte PartmbB
Arabellastraße 30
81925 München (DE)**

(54) **NON-ORIENTED ELECTROMAGNETIC STEEL SHEET**

(57)   A non-oriented electrical steel sheet with an excellent iron loss property that is effective in improving the efficiency of electrical motors and that has a chemical composition containing, in mass%, C: 0.0050% or less, Si: 2.0 to 5.0%, Mn: 2.0% or less, P: 0.20% or less, S: 0.0050% or less, Al: 2.0% or less, N: 0.0050% or less, Ti: 0.0030% or less, Nb: 0.0010% or less, V: 0.0050% or less, and O: 0.0050% or less, wherein when an alternating-current magnetic field is applied so as to achieve a frequency of 50 Hz and a maximum magnetic flux density $B_m$ of 1.5 T in a rolling direction ($^{RD}$), a sheet width direction ($^{TD}$), and a direction ($^{DD}$) forming an angle of 45° with the rolling direction, in a rolling plane of the steel sheet, and zero-peak values of resulting magnetostrictions in directions parallel to the respective magnetic field directions are represented as $\lambda_{//H}^{RD}$, $\lambda_{//H}^{TD}$, and $\lambda_{//H}^{DD}$, respectively, a magnetostriction in-plane average value $\lambda_{//H}^{ave}$ is $1.0 \times 10^{-5}$ or smaller.

[Fig. 3]

**Description**

Technical Field

The present invention relates to a non-oriented electrical steel sheet, and relates particularly to a non-oriented electrical steel sheet that exhibits an excellent iron loss property when used for iron cores of electrical motors (rotating machines) and the like.

Background Art

In recent years, as demand for reducing the energy consumed by electrical apparatuses has grown, electrical apparatuses have been strongly required to achieve higher efficiency. Accordingly, non-oriented electrical steel sheets used for iron cores of electrical motors (motor cores) have also been required to have superior magnetic properties.

A motor core comprises a stator core and a rotor core. To meet the recent demand for downsized and higher-output HEV driving motors etc., non-oriented electrical steel sheets used for stator cores are strongly required to have the excellent magnetic properties of high magnetic flux density and low iron loss.

In the motor core, multiple non-oriented electrical steel sheets processed into the cross-sectional shape of the motor core are laminated and fixed by staking, welding, bolt fastening, or the like. In addition to this fixing, the stator core is fixed on an outer frame (case) by shrink fitting or other methods. Thus, even in an unexcited state, the motor core is subjected to some kind of compressive stress by the aforementioned fixing etc.

It is known that when a non-oriented electrical steel sheet is subjected to compressive stress, the iron loss increases due to magnetoelastic interaction. Since an increase in the iron loss leads to reduced efficiency of the electrical motor, it is desirable that a non-oriented electrical steel sheet used for a motor core be less susceptible to the influence of compressive stress.

As a method to reduce the influence of compressive stress, for example, Patent Literature 1 discloses a technology that avoids worsening of iron loss due to compressive stress by setting a magnetostriction constant $\lambda_{100}$ to $35 \times 10^{-6}$ or smaller. Patent Literature 2 discloses a technology that achieves excellent magnetic properties of a non-oriented electrical steel sheet applied to a stator by setting an average value of magnetostrictions in a rolling direction and a direction at right angle to rolling after stress-relief annealing to $5.0 \times 10^{-6}$ or smaller.

Citation List

Patent Literature

        Patent Literature 1: JP-2010-248559A
        Patent Literature 2: WO 2018/179871

Summary of Invention

Technical Problem

However, one problem with the above-described technology disclosed in Patent Literature 1 is that it involves adjusting the balance between Si and Al to reduce the magnetostriction constant $\lambda_{100}$, and thus has difficulty in reconciling the magnetostriction property and the motor core's iron loss property. As for the above-described technology disclosed in Patent Literature 2, the result of a study conducted by the present inventors revealed that in many cases reducing the average value of magnetostrictions in the rolling direction and the direction at right angle to rolling did not sufficiently reduce the iron loss of the electrical motor.

Having been developed in view of these problems with the related art, the present invention aims to provide a non-oriented electrical steel sheet with an excellent iron loss property that is effective in improving the efficiency of electrical motors.

Solution to Problem

Aiming at solving the above-described problems, the present inventors vigorously conducted studies with a focus on magnetostriction deformation in an excitation process of a back yoke part of a stator core. As a result, the inventors found that an electrical motor with low iron loss and high efficiency could be manufactured by reducing an in-plane average value of magnetostrictions in directions parallel to the respective magnetic field directions resulting from applying an alternating-current magnetic field in a rolling direction, a sheet width direction (a direction at right angle to rolling), and a direction forming an angle of 45° with the rolling direction, of a non-oriented electrical steel sheet constituting a material of a motor core. This finding led us to develop the present invention.

Specifically, the present invention is a non-oriented electrical steel sheet having a chemical composition containing C: 0.0050 mass% or less, Si: 2.0 to 5.0 mass%, Mn: 2.0 mass% or less, P: 0.20 mass% or less, S: 0.0050 mass% or less, Al: 2.0 mass% or less, N: 0.0050 mass% or less, Ti: 0.0030 mass% or less, Nb: 0.0010 mass% or less, V: 0.0050 mass% or less, and O: 0.0050 mass% or less, with the balance being Fe and unavoidable impurities,

the non-oriented electrical steel sheet being characterized in that when an alternating-current magnetic field with a frequency of 50 Hz and a maximum magnetic flux density $B_m$ of 1.5 T is applied in a rolling direction ($^{RD}$), a sheet width direction ($^{TD}$), and a direction ($^{DD}$) forming an angle of 45° with the rolling direction, in a rolling plane of the steel sheet, and zero-peak values of resulting magnetostrictions in directions parallel to the respective magnetic field directions are represented as $\lambda_{//H}^{RD}$, $\lambda_{//H}^{TD}$, and $\lambda_{//H}^{DD}$, respectively, a magnetostriction in-plane average value $\lambda_{//H}^{ave}$ defined by the following Formula (1) is $1.0 \times 10^{-5}$ or smaller:

$$\lambda_{//H}^{ave} = \frac{\lambda_{//H}^{RD} + 2\lambda_{//H}^{DD} + \lambda_{//H}^{TD}}{4} \quad \cdots \quad (1)$$

The non-oriented electrical steel sheet of the present invention is characterized by containing, in addition to the chemical composition, a component of at least one group among the following groups A to L:

- Group A; at least one type selected from Sn: 0.005 to 0.20 mass% and Sb: 0.005 to 0.20 mass%
- Group B; at least one type selected from Ca: 0.0005 to 0.100 mass%, Mg: 0.0005 to 0.100 mass%, and REM: 0.0005 to 0.100 mass%
- Group C; at least one type selected from Cr: 0.01 to 1.0 mass% and Cu: 0.01 to 1.0 mass%
- Group D; Ni: 0.01 to 1.0 mass%
- Group E; at least one type selected from Mo: 0.0005 to 0.1 mass% and W: 0.001 to 0.1 mass%
- Group F; Co: 0.01 to 1.0 mass%
- Group G; at least one type selected from As: 0.001 to 0.05 mass% and B: 0.0001 to 0.005 mass%
- Group H; Pb: 0.00001 to 0.010 mass%
- Group I; Zn: 0.0001 to 0.02 mass%
- Group J; Ta: 0 to 0.0020 mass%
- Group K; at least one type selected from Zr: 0 to 0.0050 mass%, Se: 0 to 0.0050 mass%, and Bi: 0 to 0.0020 mass%
- Group L; at least one type selected from Ge: 0 to 0.030 mass% and Ga: 0 to 0.030 mass%.

Advantageous Effects of Invention

The present invention makes it possible to manufacture an electrical motor with low iron loss.

Brief Description of Drawings

[Fig. 1] is a schematic view illustrating the structure of a ring core used to study iron loss.
[Fig. 2] is a graph showing an influence that a magnetic field applied in a sheet thickness direction during finishing annealing has on magnetostrictions of a product sheet in directions parallel to magnetic field directions.
[Fig. 3] is a graph showing an influence that an in-plane average value $\lambda_{//H}^{ave}$ of magnetostrictions of a product sheet in the directions parallel to the magnetic field directions has on hysteresis loss $W_{hys}$ of a ring core.

Description of Embodiment

First, an experiment that inspired the development of the present invention will be described.
A steel slab having a chemical composition containing C: 0.001 mass%, Si: 3.2 mass%, Mn: 0.6 mass%, P: 0.01 mass%, S: 0.0020 mass%, Al: 0.50 mass%, N: 0.0015 mass%, Ti: 0.0010 mass%, Nb: 0.0001 mass%, V: 0.0005 mass%, and O: 0.0010 mass%, with the balance being Fe and unavoidable impurities, was hot-rolled into a hot-rolled sheet with a sheet thickness of 1.8 mm. Next, this hot-rolled sheet was subjected to hot-rolled sheet annealing of 950°C×30s, pickled, and cold-rolled into a cold-rolled sheet with a final sheet thickness of 0.25 mm. Next, this cold-rolled sheet was rapidly heated through a temperature region of 200°C to 700°C at an average heating rate of 100°C/s, and in this temperature region, direct-current magnetic fields of varying magnitudes were applied in the sheet thickness direction. Thereafter, the steel sheet was heated from 700°C to 980°C without being cooled, and was subjected to finishing annealing of 980°C×10s.

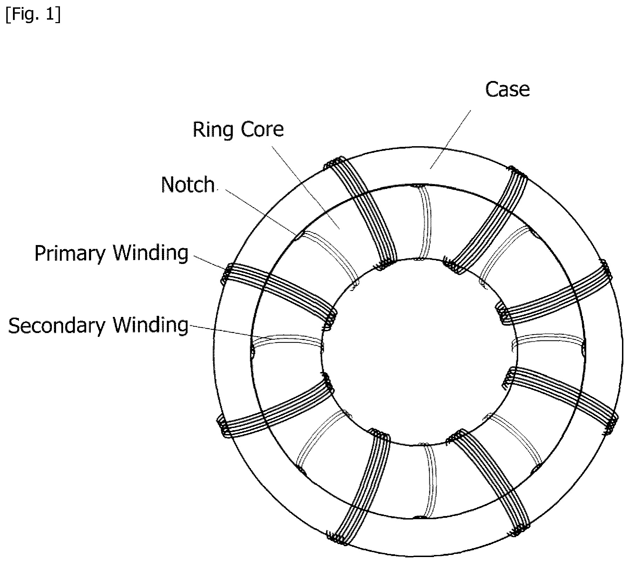

From the finishing-annealed steel sheet thus obtained, test pieces having a ring shape with an outside diameter of 80 mm and an inside diameter of 60 mm and having notches at eight positions in the ring outer circumference as shown in Fig. 1 were sampled by punching. Next, 100 sheets of the ring-shaped test pieces were laminated in the sheet thickness direction and fixed at six positions by V-staking to produce a ring core. Thereafter, this ring core was shrink-fitted into an aluminum-alloy case having a thickness of 3 mm and an inside diameter of 80 mm, with a shrink-fit allowance of 30 $\mu$m.

Thereafter, a primary winding and a secondary winding were wound around the ring core as shown in Fig. 1, and then hysteresis loss $W_{hys}$ of the ring core was measured by exciting it at a frequency of 50 Hz and a maximum magnetic flux density $B_m$ of 1.5 T. Here, the reason why the hysteresis loss $W_{hys}$ was measured is that while eddy current loss is influenced by an excitation frequency, with hysteresis loss, that influence can be eliminated to clarify the influence of magnetostriction.

Further, rectangular test pieces measuring 30 mm wide by 280 mm long were cut out from the finishing-annealed steel sheet such that the rolling direction, the sheet width direction, and a direction forming an angle of 45° with the rolling direction constituted the respective length directions, and were excited by applying an alternating-current magnetic field with a frequency of 50 Hz and a maximum magnetic flux density $B_m$ of 1.5 T in the length directions of the respective test pieces. The zero-peak values of the resulting magnetostrictions in directions parallel to the respective magnetic field directions were measured using a laser Doppler vibrometer. In the present invention, the zero-peak values of magnetostrictions in the directions parallel to the respective magnetic field directions resulting from exciting the steel sheet in each of the rolling direction, the sheet width direction, and the direction forming an angle of 45° with the rolling direction are represented as $\lambda_{//H}^{RD}$, $\lambda_{//H}^{TD}$, and $\lambda_{//H}^{DD}$, respectively.

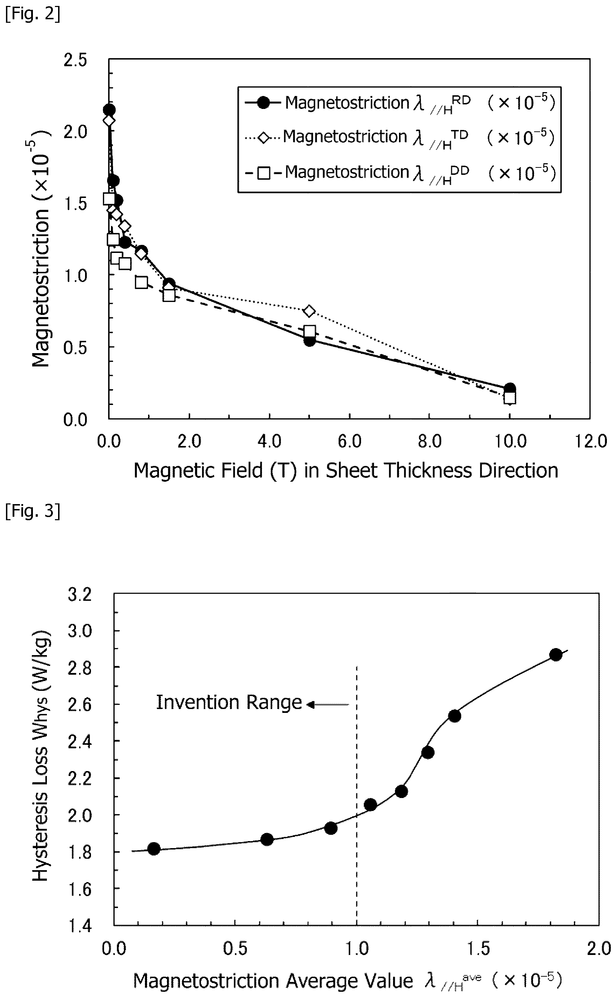

Fig. 2 shows a relationship between the magnitude of a direct-current magnetic field applied in the sheet thickness direction during finishing annealing and the zero-peak values $\lambda_{//H}^{RD}$, $\lambda_{//H}^{TD}$, and $\lambda_{//H}^{DD}$ of magnetostrictions in the directions parallel to the respective magnetic field directions that were measured by the above-described method. It can be seen from this graph that as the magnetic field applied in the sheet thickness direction during finishing annealing becomes higher, the zero-peak values of the magnetostrictions of the product sheet in the directions parallel to the respective magnetic field directions become smaller.

Fig. 3 shows a relationship between an average value $\lambda_{//h}^{ave}$, defined by Formula (1) below,

$$\lambda_{//H}^{ave} = \frac{\lambda_{//H}^{RD} + 2\lambda_{//H}^{DD} + \lambda_{//H}^{TD}}{4} \quad \cdots \quad (1)$$

, of magnetostrictions in a rolling plane of the product sheet in the directions parallel to the respective magnetic field directions (in the present invention, also referred to as "in-plane average value") and the hysteresis loss $W_{hys}$ measured at the ring core. It can be seen from this graph that as the magnetostriction in-plane average value $\lambda_{//H}^{ave}$ becomes smaller, the hysteresis loss $W_{hys}$ decreases.

While the mechanism of how the magnetostriction in-plane average value $\lambda_{//H}^{ave}$ influences the iron loss (hysteresis loss $W_{hys}$) of the shrink-fitted ring core has not yet been fully elucidated, the present inventors speculate as follows:

When a ring core is excited by an alternating current, the ring core is excited in the circumferential direction of the ring core and undergoes elongation and contraction in the magnetic field direction due to magnetostriction, so that compressive stress acts in the circumferential direction of the ring core. The angle that the circumferential direction of the ring core forms with the rolling direction of the material steel sheet varies according to the position. As magnetostriction of a non-oriented electrical steel sheet generally has anisotropy in the rolling plane, the compressive stress acting in the circumferential direction varies according to the position in the circumferential direction. Thus, it seems that when, for example, the magnetostriction $\lambda_{//H}^{RD}$ in the direction parallel to the rolling direction is small but the magnetostriction $\lambda_{//H}^{TD}$ in the sheet width direction is large, the compressive stress of magnetostriction becomes high at a position where the circumferential direction of the ring core is parallel to the sheet width direction, leading to an increase in the hysteresis loss. Therefore, to avoid an increase in the hysteresis loss due to the compressive stress of magnetostriction, it is considered to be effective to reduce the magnetostriction in the direction parallel to the magnetic field direction in all directions in the rolling plane, i.e., to reduce the magnetostriction in-plane average value $\lambda_{//H}^{ave}$.

The present invention has been developed based on this novel insight.

Next, purposes of the non-oriented electrical steel sheet of the present invention will be described.

The non-oriented electrical steel sheet of the present invention is characterized by having the effect of suppressing the increase in the iron loss attributable to compressive stress caused by magnetostriction, and therefore can be advantageously used for stator cores. However, this does not restrict its application to rotor cores. Therefore, a stator core and a rotor core may be obtained at the same time from the non-oriented electrical steel sheet of the present invention.

Next, a chemical composition of the non-oriented electrical steel sheet of the present invention will be described.

C: 0.0050 mass% or less

C contained in the product sheet is a harmful element that causes magnetic aging and forms carbides, thereby degrading the iron loss property. Therefore, the upper limit of C contained in the material is restricted to 0.0050 mass%. C is preferably 0.0040 mass% or less. While the lower limit of C is not particularly specified, from the viewpoint of reducing the decarburization cost in a refining process, the lower limit is preferably approximately 0.0001 mass%.

Si: 2.0 to 5.0 mass%

As Si has an effect of increasing the specific resistance of steel to reduce the iron loss and an effect of increasing the strength of steel by solid-solution strengthening, it is contained in an amount of 2.0 mass% or more. On the other hand, when Si exceeds 5.0 mass%, rolling becomes difficult; therefore, the upper limit is 5.0 mass%. Si is preferably within a range of 2.8 to 4.5 mass%. Si is more preferably within a range of 3.2 to 4.0 mass%.

Mn: 2.0 mass% or less

Like Si, Mn is an element effective for increasing the specific resistance and the strength of steel. Mn is also an element that improves hot workability. However, adding Mn in excess of 2.0 mass% causes slab cracking etc. and degrades the operability in the steel manufacturing process; therefore, the upper limit is 2.0 mass%. Mn is preferably within a range of 0.1 to 1.5 mass%.

P: 0.20 mass% or less

P is a useful element used to adjust the strength (hardness) of steel. However, when P exceeds 0.20 mass%, the steel becomes brittle and difficult to roll; therefore, the upper limit is 0.20 mass%. While the lower limit is not particularly specified, from the viewpoint of reducing the dephosphorization cost in the refining process, the lower limit is preferably approximately 0.001 mass%. P is preferably within a range of 0.01 to 0.1 mass%.

S: 0.0050 mass% or less

S is an element that forms fine precipitates and hinders grain growth during finishing annealing and stress-relief annealing, thereby adversely affecting the iron loss property. In particular, when the content exceeds 0.0050 mass%, this adverse effect becomes noticeable; therefore, the upper limit is restricted to 0.0050 mass%. S is preferably 0.003 mass% or less.

Al: 2.0 mass% or less

Like Si, Al is a useful element that has the effects of increasing the specific resistance of steel and reducing the iron loss. However, when Al exceeds 2.0 mass%, the steel becomes brittle and difficult to roll; therefore, the upper limit of Al is 2.0 mass%. Al is preferably 1.5 mass% or less. When Al is too little, the effect of increasing the specific resistance becomes weak; therefore, the content is preferably 0.1 mass% or more.

N: 0.0050 mass% or less

N is an element that forms fine precipitates and hinders grain growth during finishing annealing and stress-relief annealing, thereby adversely affecting the iron loss property. In particular, when the content exceeds 0.0050 mass%, this adverse effect becomes noticeable; therefore, the upper limit is restricted to 0.0050 mass%. N is preferably 0.003 mass% or less.

Ti: 0.0030 mass% or less

Similarly, Ti is an element that forms fine precipitates and hinders grain growth during finishing annealing and stress-relief annealing, thereby adversely affecting the iron loss property. In particular, when the content exceeds 0.0030 mass%, this adverse effect becomes noticeable; therefore, the upper limit is restricted to 0.0030 mass%. Ti is preferably 0.002 mass% or less.

Nb: 0.0010 mass% or less

Like Ti, Nb is an element that forms fine precipitates and hinders grain growth during finishing annealing and stress-relief annealing, thereby adversely affecting the iron loss property. In particular, when Nb exceeds 0.0010 mass%, this adverse effect becomes noticeable; therefore, the upper limit is restricted to 0.0010 mass%. Nb is preferably 0.0005 mass% or less.

V: 0.0050 mass% or less

Like Ti and Nb, V is an element that forms fine precipitates and hinders grain growth during finishing annealing and stress-relief annealing, thereby adversely affecting the iron loss property. In particular, when V exceeds 0.0050 mass%, this adverse effect becomes noticeable; therefore, the upper limit is restricted to 0.0050 mass%. V is preferably 0.0003 mass% or less.

O: 0.0050 mass% or less

O is a harmful element that forms oxide-based inclusions and hinders grain growth, thereby increasing the iron loss. In particular, when O exceeds 0.0050 mass%, this adverse effect becomes noticeable; therefore, the upper limit is 0.0050 mass%. O is preferably 0.0030 mass% or less.

The balance of the steel material used to manufacture the non-oriented electrical steel sheet of the present invention other than the above-described components is substantially Fe and unavoidable impurities. However, in addition to the above-described components, the following components can be contained as appropriate according to the required properties.

At least one type selected from Sn: 0.005 to 0.20 mass% and Sb: 0.005 to 0.20 mass%

Sn and Sb have an effect of improving the recrystallization texture and reducing the iron loss. Obtaining this effect requires adding each of Sn and Sb in an amount of 0.005 mass% or more. On the other hand, adding each of Sn and Sb in excess of 0.20 mass% saturates this effect. Therefore, Sn and Sb are preferably each added within a range of 0.005 to 0.20 mass%. Sn and Sb are more preferably each added within a range of 0.01 to 0.10 mass%.

At least one type selected from Ca: 0.0005 to 0.100 mass%, Mg: 0.0005 to 0.100 mass%, and REM: 0.0005 to 0.100 mass%

Ca, Mg, and REM have an effect of promoting grain growth and improving the iron loss property by forming stable sulfides and reducing fine sulfides. Obtaining this effect requires adding each of Ca, Mg, and REM in an amount of 0.0005 mass% or more. On the other hand, adding each of Ca, Mg, and REM in excess of 0.100 mass% conversely worsens the iron loss. Therefore, Ca, Mg, and REM are preferably each added within a range of 0.0005 to 0.100 mass%. Ca, Mg, and REM are more preferably each within a range of 0.001 to 0.05 mass%.

In addition to the above-described components, the steel material used to manufacture the non-oriented electrical steel sheet of the present invention can contain the following components as appropriate. However, as the raw material costs of these components are relatively high, it is desirable to reduce the amounts added to the minimum necessary.

At least one type selected from Cr: 0.01 to 1.0 mass% and Cu: 0.01 to 1.0 mass%

Like Si and Al, Cr and Cu have an effect of increasing the specific resistance of steel and reducing the iron loss. However, Cr and Cu have lower solid-solution strengthening capabilities compared with Si and Al, and are therefore preferably added when the iron loss is desired to be reduced without the rollability being degraded. However, when the amount of each of Cr and Cu added is less than 0.01 mass%, the above-described effect cannot be fully obtained, whereas when the amount exceeds 1.0 mass%, the iron loss improving effect saturates. Therefore, Cr and Cu are preferably each added within a range of 0.01 to 1.0 mass%.

Ni: 0.01 to 1.0 mass%

Ni is an element that has a high solid-solution strengthening capability and is effective for increasing the strength of steel. However, when the amount added is less than 0.01 mass%, this effect cannot be fully obtained, whereas when the amount exceeds 1.0 mass%, the raw material cost increases. Therefore, Ni is preferably added within a range of 0.01 to 1.0 mass%.

At least one type selected from Mo: 0.0005 to 0.1 mass% and W: 0.001 to 0.1 mass%

Mo and W have an effect of coarsening carbides and reducing the iron loss. However, when the amount of Mo added is less than 0.0005 mass% and the amount of W added is 0.001 mass% or less, this effect cannot be fully obtained, whereas when the amount of each of Mo and W added exceeds 0.1 mass%, this iron loss improving effect saturates. Therefore, Mo and W are preferably added within ranges of 0.0005 to 0.1 mass% and 0.001 to 0.1 mass%, respectively.

Co: 0.01 to 1.0 mass%

Co has effects of increasing the magnetic flux density and reducing the iron loss by increasing the magnetic moment of an Fe alloy. However, when the amount added is less than 0.01 mass%, this effect cannot be fully obtained, whereas when the amount exceeds 1.0 mass%, the raw material cost increases. Therefore, Co is preferably added within a range of 0.01 to 1.0 mass%.

At least one type selected from As: 0.001 to 0.05 mass% and B: 0.0001 to 0.005 mass%

As and B are grain boundary segregation elements and have an effect of reducing the iron loss through improvement of the texture. This effect is obtained by adding As: 0.001 mass% or more and B: 0.0001 mass% or more. However, As is an element that also causes grain boundary embrittlement, and particularly this harmful effect becomes noticeable when As exceeds 0.05 mass%. Therefore, As is preferably added within a range of 0.001 to 0.05 mass%. When B exceeds 0.005 mass%, its adverse effect of inhibiting grain boundary migration becomes strong. Therefore, B is preferably added within a range of 0.0001 to 0.005 mass%.

Pb: 0.00001 to 0.010 mass%

Pb is an element that is finely dispersed in steel as metal inclusions, and remains in the steel even after finishing annealing. Thus, during punching, Pb forms a starting point of stress concentration, promotes progress of cracks, and mitigates wearing of the die, thereby improving the punchability. However, when Pb is less than 0.00001 mass%, this punchability improving effect cannot be fully obtained, whereas when Pb exceeds 0.010 mass%, a grain growth inhibiting force becomes so strong that favorable iron loss cannot be achieved. Therefore, Pb is within a range of 0.00001 to 0.010 mass%. Pb is preferably within a range of 0.00003 to 0.0050 mass%.

Zn: 0.0001 to 0.02 mass%

Zn has an effect of improving grain growth and reducing a magnetic domain-wall pinning force by forming stable and coarse sulfides or oxides. Obtaining this effect requires adding Zn in an amount of 0.0001 mass% or more. However, adding Zn in excess of 0.02 mass% saturates this effect. Therefore, Zn is preferably within a range of 0.0001 to 0.02 mass%.

Ta: 0 to 0.0020 mass%

Ta is an element effective for improving the workability and enhancing the strength of steel and can be added as appropriate. To reliably obtain this effect, Ta is preferably added in an amount of 0.0001 mass% or more. On the other hand, Ta is an element that increases the iron loss, and particularly when Ta exceeds 0.0020 mass%, this adverse effect becomes noticeable; therefore, the upper limit is preferably 0.0020 mass%. Ta is more preferably within a range of 0.0003 to 0.0010 mass%.

At least one type selected from Zr: 0 to 0.0050 mass%, Se: 0 to 0.0050 mass%, and Bi: 0 to 0.0020 mass%

Zr, Se, and Bi are all elements that are finely dispersed in steel as inclusions to improve the workability, as well as refine the crystal grains to increase the strength of the steel, and therefore can be added as appropriate. However, when each of Zr and Se exceeds 0.0050 mass% and Bi exceeds 0.0020 mass%, the grain growth inhibiting force becomes so strong that favorable iron loss cannot be achieved; therefore, these values are preferably set as the upper limits. More preferable ranges are: Zr: 0.0005 to 0.0030 mass%, Se: 0.0001 to 0.0030 mass%, and Bi: 0.0001 to 0.0010 mass%.

At least one type selected from Ge: 0 to 0.030 mass% and Ga: 0 to 0.030 mass%

Ge and Ga are both elements that improve the texture. To reliably obtain this effect, Ge and Ga are preferably each added in an amount of 0.001 mass% or more. On the other hand, adding each of Ge and Ga in excess of 0.030 mass% saturates the aforementioned effect; therefore, the upper limit is preferably 0.030 mass%. Ge and Ga are more preferably each within a range of 0.003 to 0.010 mass%.

Next, the magnetostriction properties of the non-oriented electrical steel sheet of the present invention will be described.

Magnetostriction in-plane average value $\lambda_{//H}^{ave}$: $1.0 \times 10^{-5}$ or smaller

In the back yoke part of the stator core, the steel sheet is excited mainly in the circumferential direction, and thus the back yoke part is excited in every direction in the rolling plane of the steel sheet depending on its position. When excited, the steel sheet elongates and contracts in a direction parallel to the direction of excitation (magnetic field direction), so that compressive stress acts on the back yoke part in the circumferential direction. In this case, if the elongation and contraction in each direction in the rolling plane of the steel sheet resulting from the excitation is large, the compressive stress due to magnetostriction becomes high, leading to an increase in the iron loss of the motor core. As can be seen from Fig. 3, this increase in the iron loss becomes noticeable when the in-plane average value $\lambda_{//H}^{ave}$ that is an average value of magnetostrictions in the respective directions in the rolling plane exceeds $1.0 \times 10^{-5}$. In the present invention, therefore, the magnetostriction in-plane average value $\lambda_{//H}^{ave}$ is restricted to $1.0 \times 10^{-5}$ or smaller. It is more preferable that the magnetostriction in-plane average value $\lambda_{/H/}^{ave}$ be $0.8 \times 10^{-5}$ or smaller because then the reducing effect on the compressive stress due to magnetostriction becomes stronger, which is effective in improving the iron loss.

The magnetostriction in-plane average value $\lambda_{//H}^{ave}$ is defined by the following Formula (1).

$$\lambda_{//H}^{ave} = \frac{\lambda_{//H}^{RD} + 2\lambda_{//H}^{DD} + \lambda_{//H}^{TD}}{4} \quad \cdots \quad (1)$$

Here, $\lambda_{//H}^{RD}$, $\lambda_{//H}^{TD}$, and $\lambda_{//H}^{DD}$ in the above Formula are zero-peak values of magnetostrictions in directions parallel to the respective magnetic field directions resulting from exciting the steel sheet at a frequency of 50 Hz and a maximum magnetic flux density $B_m$ of 1.5 T in the rolling direction ($^{RD}$), the sheet width direction ($^{TD}$), and the direction ($^{DD}$) forming an angle of 45° with the rolling direction, in the rolling plane of the steel sheet.

Next, a manufacturing method of the non-oriented electrical steel sheet of the present invention will be described. In the manufacturing method to be described below, processes other than finishing annealing are one example of methods and conditions for manufacturing the non-oriented electrical steel sheet of the present invention, and it is not intended to reject manufacturing by different methods and conditions.

First, steel having a chemical composition complying with the above-described present invention is smelted by a commonly known ordinary refining process using a converter, an electrical furnace, a vacuum degassing apparatus, etc., and is then turned into a steel material (slab) by a continuous casting method or an ingot making-blooming method. This slab is hot-rolled by commonly known ordinary method and conditions into a hot-rolled sheet.

Among the elements that can be contained in the steel material used in the present invention, elements such as Cu, Sn, Ni, Cr, and Mo are elements that get mixed in from raw material scrap while steel is smelted by an electrical furnace. Therefore, when using electrical furnace steel, these elements need not be reduced nor be purposefully add, which contributes to reducing the raw material cost and the refining cost. For casting and hot rolling of the smelted steel, a thin-slab continuous caster having a continuous caster and a hot-rolling machine directly coupled to each other may be used. The thin-slab continuous caster can cast a thin slab with a slab thickness of 200 mm or smaller and immediately hot-roll it by the hot-rolling machine directly coupled to the casting facility, and can thereby achieve a smaller finish thickness than ordinary hot rolling. As a result, the rolling load in the subsequent cold rolling is reduced and the productivity improves, as well as the texture is improved by a decrease in the cold rolling reduction, which is effective for reducing the iron loss.

The hot-rolled sheet may be subjected to hot-rolled sheet annealing as necessary, and the soaking temperature in that case is preferably within a range of 800 to 1100°C. If the soaking temperature is lower than 800°C, the effect of hot-rolled sheet annealing is too weak to fully obtain the magnetic property improving effect. On the other hand, a soaking temperature exceeding 1100°C may be disadvantageous in terms of the manufacturing cost or may promote brittle fracture (sheet breakage) during cold rolling.

Thereafter, the hot-rolled sheet after the hot rolling or the hot-rolled sheet annealing is cold-rolled once, or cold-rolled twice or more times with intermediate annealing between each rolling, into a cold-rolled sheet with a final sheet thickness. Here, for the cold rolling to achieve the final sheet thickness, warm rolling that rolls the steel sheet with the temperature thereof raised to 200°C or higher is preferably adopted from the viewpoint of increasing the magnetic flux density.

It is preferable that the final sheet thickness (product sheet thickness) be within a range of 0.1 to 0.3 mm. If the thickness is smaller than 0.1 mm, the productivity decreases, whereas if the thickness exceeds 0.3 mm, the iron loss reducing effect is weak.

The cold-rolled sheet reduced to the final sheet thickness is thereafter subjected to finishing annealing, for which conditions are preferably continuous annealing that involves soaking at a temperature of 700 to 1100°C for 1 to 300 s. If the soaking temperature is lower than 700°C, recrystallization does not progress enough, so that favorable magnetic properties cannot be obtained, and moreover the shape correcting effect of continuous annealing cannot be fully obtained. On the other hand, if the soaking temperature exceeds 1100°C, the crystal grains coarsen and the steel sheet strength decreases.

In the heating process of the finishing annealing, it is preferable that rapid heating at 100°C/s or more be performed through a temperature region of 200°C to 700°C. Setting the heating rate to 100°C/s or higher can randomize the nucleation orientation of primary recrystallized grains and reduce the magnetostriction in-plane average value $\lambda_{//H}^{ave}$. If the heating rate is less than 100°C/s, this randomizing effect cannot be fully obtained. The heating rate is preferably 500°C/s or more. While the upper limit of the heating rate is not particularly specified, it is preferably about 2000°C/s from a viewpoint that increasing the heating rate to above 2000°C/s saturates the magnetostriction reducing effect, and a viewpoint of avoiding excessive energy consumption.

Here, what is important in the present invention is that it is necessary to apply a direct-current magnetic field in the sheet thickness direction in a temperature region of 200°C to 700°C in the heating process of the finishing annealing. Primary recrystallization of a cold-rolled structure occurs at a temperature of 500°C or higher, particularly 600°C or higher. Therefore, when a direct-current magnetic field is applied in the sheet thickness direction in a temperature region of 500°C to 700°C, nucleation occurs preferentially in a crystal orientation that has an axis of easy magnetization in the sheet thickness direction, and the axis of easy magnetization in the rolling plane becomes random, which can further reduce the magnetostriction in-plane average value $\lambda_{//H}^{ave}$.

The temperature region for applying a direct-current magnetic field is preferably 600°C or higher where spontaneous magnetization of steel is weak, from the viewpoints of sufficiently securing the reducing effect on the in-plane average value $\lambda_{//H}^{ave}$ of magnetostriction due to the direct-current magnetic field, reducing the magnetic field force generated in the steel sheet by the direct-current magnetic field, and preventing the steel sheet from departing from the transfer line. The strength of the magnetic field to be applied need be 1 T or higher, and is preferably 5 T or higher to further enhance this effect.

Next, to secure insulation properties when using the steel sheets as laminated, it is preferable that an insulation coating be formed on the surface of the finishing-annealed steel sheet. It is desirable to select, as this insulation coating, an organic coating containing resin when favorable punchability is desired to be secured, and a semi-organic or inorganic coating when importance is placed on weldability.

When manufacturing a stator core using the non-oriented electrical steel sheet of the present invention as the iron core material, common practice is to process the finishing-annealed steel sheet into a core shape by punching or the like, stack the steel sheets, and fixing them to assemble a stator core, and then subject it to stress-relief annealing. This stress-relief annealing is preferably performed in an inert gas atmosphere, under the conditions of 780 to 950°C×0.1 to 10 hr. If the stress-relief annealing temperature is lower than 780°C, the iron loss improving effect by stress-relief annealing is weak, whereas if the temperature exceeds 950°C, it becomes difficult to secure insulation between the laminated steel sheets.

Example 1

A steel slab having a chemical composition containing C: 0.001 mass%, Si: 3.4 mass%, Mn: 0.4 mass%, P: 0.01 mass%, S: 0.0020 mass%, Al: 0.80 mass%, N: 0.0015 mass%, Ti: 0.0010 mass%, Nb: 0.0001 mass%, V: 0.0005 mass%, and O: 0.0010 mass%, with the balance being Fe and unavoidable impurities, was hot-rolled into a hot-rolled sheet with a sheet thickness of 1.8 mm. Next, this hot-rolled sheet was subjected to hot-rolled sheet annealing of 950°C×30s, pickled, cold-rolled for the first time, subjected to intermediate annealing of 900°C×30s, and then cold-rolled for the second time with a rolling reduction set to 60% into a cold-rolled sheet with a final sheet thickness of 0.25 mm. Thereafter, this cold-rolled sheet was rapidly heated through a temperature region of 200°C to 700°C at an average heating rate of 1000°C/s, and in this temperature region, direct-current magnetic fields with the magnitude varying from 0 to 20 T were applied in the sheet thickness direction. Thereafter, the steel sheet was heated from 700°C to 980°C, without being cooled, and subjected to finishing annealing of 980°C×10s, and then an insulation coating was formed thereon to obtain a product sheet.

From the product sheet thus obtained, test pieces having a ring shape with an outside diameter of 80 mm and an inside diameter of 60 mm and having notches at eight positions in the ring outer circumference as shown in Fig. 1 were punched out. Then, 100 sheets of the test pieces were laminated in the sheet thickness direction and fixed at six positions by V-staking to produce a ring core. Next, this ring core was shrink-fitted into an aluminum-alloy case having a thickness of 3 mm and an inside diameter of 80 mm, with a shrink-fit allowance of 30 μm. Thereafter, a primary winding and a secondary winding were wound around the shrink-fitted ring core as shown in Fig. 1, and then the hysteresis loss $W_{hys}$ when exciting the ring core at a frequency of 50 Hz and a maximum magnetic flux density $B_m$ of 1.5 T was measured. While the hysteresis loss $W_{hys}$ differs depending on the sheet thickness, in the case of the ring core produced from a product sheet with a sheet thickness of 0.25 mm, having hysteresis loss $W_{hys}$ of 2.00 W/Kg or smaller can be deemed as favorable.

Further, rectangular test pieces measuring 30 mm wide by 280 mm long were cut out from the product sheet such that the rolling direction, the sheet width direction, and the direction at 45° from the rolling direction constituted the respective length directions, and a magnetic field with a frequency of 50 Hz and a maximum magnetic flux density $B_m$ of 1.5 T was applied in the length directions. The zero-peak values $\lambda_{//H}^{RD}$, $\lambda_{//H}^{TD}$, and $\lambda_{//H}^{DD}$ of the resulting magnetostrictions in the directions parallel to the respective magnetic field directions were measured using a laser Doppler vibrometer, and the magnetostriction in-plane average value $\lambda_{//H}^{ave}$ was obtained by the following Formula (1):

$$\lambda_{//H}^{ave} = \frac{\lambda_{//H}^{RD} + 2\lambda_{//H}^{DD} + \lambda_{//H}^{TD}}{4} \quad \cdot \cdot \cdot \ (1)$$

The result of this measurement is shown in Table 1. From this table, it can be seen that the ring cores produced using the non-oriented electrical steel sheet manufactured under conditions complying with the present invention each have excellent iron loss property.

[Table 1]

| № | Magnetic field (T) applied in sheet thickness direction | Magnetostriction properties | | | | Ring core hysteresis loss Whys(W/kg) |
|---|---|---|---|---|---|---|
| | | Magnetostriction $\lambda_{//H}^{RD}$ (×10⁻⁵) | Magnetostriction $\lambda_{//H}^{TD}$ (×10⁻⁵) | Magnetostriction $\lambda_{//H}^{DD}$(×10⁻⁵) | Magnetostriction average value $\lambda_{//H}^{ave}$(×10⁻⁵) | |
| 1 | 0.0 | 2.31 | 2.22 | 1.62 | 1.9 | 2.79 |
| 2 | 0.1 | 1.86 | 1.79 | 1.45 | 1.6 | 2.46 |
| 3 | 0.2 | 1.67 | 1.65 | 1.26 | 1.5 | 2.44 |
| 4 | 0.4 | 1.35 | 1.35 | 1.07 | 1.2 | 2.21 |
| 5 | 0.8 | 1.09 | 1.06 | 0.94 | 1.0 | 2.13 |
| 6 | 1.0 | 0.98 | 0.97 | 0.91 | 0.9 | 1.98 |
| 7 | 1.5 | 0.92 | 0.91 | 0.82 | 0.9 | 1.91 |
| 8 | 3.0 | 0.74 | 0.75 | 0.71 | 0.7 | 1.88 |
| 9 | 5.0 | 0.56 | 0.54 | 0.52 | 0.5 | 1.85 |
| 10 | 10.0 | 0.19 | 0.16 | 0.13 | 0.2 | 1.81 |
| 11 | 20.0 | 0.18 | 0.18 | 0.11 | 0.145 | 1.80 |

Example 2

Steel slabs having chemical compositions containing the various components shown in Table 2, with the balance being Fe and unavoidable impurities, were hot-rolled into hot-rolled sheets with a sheet thickness of 1.8 mm. Next, these hot-rolled sheets were subjected to hot-rolled sheet annealing of 950°C×30s, pickled, cold-rolled for the first time, subjected to intermediate annealing of 900°C×30s, and then cold-rolled for the second time with a rolling reduction set to 55% into cold-rolled sheets with a final sheet thickness of 0.25 mm. Next, these cold-rolled sheets were rapidly heated through a temperature region of 200°C to 700°C at an average heating rate of 1000°C/s, and in this temperature region, direct-current magnetic fields with the magnitude varying within a range of 0 to 8 T were applied in the sheet thickness direction. Thereafter, the steel sheets were heated from the temperature of 700°C to 980°C, without being cooled, and subjected to finishing annealing of 980°C×10s, and then an insulation coating was formed thereon to obtain product sheets.

From each of the product sheets thus obtained, test pieces having a ring shape with an outside diameter of 80 mm and an inside diameter of 60 mm and having notches at eight positions in the ring outer circumference as shown in Fig. 1 were punched out. Then, 100 sheets of the test pieces were laminated in the sheet thickness direction and fixed at six positions by welding to produce a ring core. Next, this ring core was shrink-fitted into an aluminum-alloy case having a thickness of 3 mm and an inside diameter of 80 mm, with a shrink-fit allowance of 30 $\mu$m. Thereafter, a primary winding and a secondary winding were wound around the shrink-fitted ring core as shown in Fig. 1, and then the hysteresis loss $W_{hys}$ when exciting the ring core at a frequency of 50 Hz and a maximum magnetic flux density $B_m$ of 1.5 T was measured. Having hysteresis loss $W_{hys}$ of 2.00 W/Kg or smaller was evaluated as having favorable iron loss.

Further, rectangular test pieces measuring 30 mm wide by 280 mm long were cut out from the product sheet such that the rolling direction, the sheet width direction, and the direction at 45° from the rolling direction constituted the respective length directions, and an alternating-current magnetic field with a frequency of 50 Hz and a maximum magnetic flux density $B_m$ of 1.5 T was applied in the length directions of the test pieces. The zero-peak values $\lambda_{//H}^{RD}$, $\lambda_{//H}^{TD}$, and $\lambda_{//H}^{DD}$ of the resulting magnetostrictions in the directions parallel to the respective magnetic field directions were measured using a laser Doppler vibrometer, and the magnetostriction in-plane average value $\lambda_{//H}^{ave}$ was obtained by the following Formula (1):

$$\lambda_{//H}^{ave} = \frac{\lambda_{//H}^{RD} + 2\lambda_{//H}^{DD} + \lambda_{//H}^{TD}}{4} \quad \cdots \quad (1)$$

The result of this measurement is shown in Table 2. From this table, it can be seen that the ring cores produced using a non-oriented electrical steel sheet manufactured using a steel material having a chemical composition complying with the present invention and under conditions complying with the present invention each have excellent iron loss property. The steel sheet No. 20 (Comparative Example) in Table 2 fractured during cold rolling and could not be used as a product sheet.

[Table 2-1]

| No. | Chemical components (mass%) of steel material | | | | | | | | | | | | Magnetic field (T) in sheet thickness direction | Steel sheet properties | | Remarks |
| | C | Si | Mn | P | S | Al | N | Ti | Nb | v | O | Others | | Magnetostriction average value $\lambda_{///H}^{ave}$ ($\times 10^{-5}$) | Ring core hysteresis loss $W_{hys}$ (W/kg) | |
|---|---|---|---|---|---|---|---|---|---|---|---|---|---|---|---|---|
| 1 | 0.001 | 3.0 | 0.8 | 0.01 | 0.0015 | 0.5 | 0.0010 | 0.0005 | 0.0001 | 0.0001 | 0.0005 | - | 0 | 1.82 | 2.65 | Comparative Example |
| 2 | 0.001 | 3.0 | 0.8 | 0.01 | 0.0015 | 0.5 | 0.0010 | 0.0005 | 0.0001 | 0.0001 | 0.0005 | - | 3 | 0.78 | 1.89 | Invention Example |
| 3 | 0.001 | 3.0 | 0.8 | 0.01 | 0.0015 | 0.5 | 0.0010 | 0.0005 | 0.0001 | 0.0001 | 0.0005 | - | 8 | 0.18 | 1.80 | Invention Example |
| 4 | 0.006 | 3.0 | 0.8 | 0.01 | 0.0015 | 0.5 | 0.0010 | 0.0005 | 0.0001 | 0.0001 | 0.0005 | - | 8 | 0.18 | 2.05 | Comparative Example |
| 5 | 0.001 | 1.8 | 0.8 | 0.01 | 0.0015 | 0.5 | 0.0010 | 0.0005 | 0.0001 | 0.0001 | 0.0005 | - | 8 | 1.05 | 2.12 | Comparative Example |
| 6 | 0.001 | 2.1 | 0.8 | 0.01 | 0.0015 | 0.5 | 0.0010 | 0.0005 | 0.0001 | 0.0001 | 0.0005 | - | 0 | 1.77 | 2.59 | Comparative Example |
| 7 | 0.001 | 2.1 | 0.8 | 0.01 | 0.0015 | 0.5 | 0.0010 | 0.0005 | 0.0001 | 0.0001 | 0.0005 | - | 3 | 0.71 | 1.78 | Invention Example |
| 8 | 0.001 | 2.1 | 0.8 | 0.01 | 0.0015 | 0.5 | 0.0010 | 0.0005 | 0.0001 | 0.0001 | 0.0005 | - | 8 | 0.24 | 1.95 | Invention Example |
| 9 | 0.001 | 4.5 | 0.8 | 0.01 | 0.0015 | 0.5 | 0.0010 | 0.0005 | 0.0001 | 0.0001 | 0.0005 | - | 0 | 1.69 | 2.46 | Comparative Example |
| 10 | 0.001 | 4.5 | 0.8 | 0.01 | 0.0015 | 0.5 | 0.0010 | 0.0005 | 0.0001 | 0.0001 | 0.0005 | - | 3 | 0.64 | 1.65 | Invention Example |
| 11 | 0.001 | 5.2 | 0.8 | 0.01 | 0.0015 | 0.5 | 0.0010 | 0.0005 | 0.0001 | 0.0001 | 0.0005 | - | 8 | 0.13 | 2.15 | Comparative Example |
| 12 | 0.001 | 3.0 | 0.2 | 0.01 | 0.0015 | 0.5 | 0.0010 | 0.0005 | 0.0001 | 0.0001 | 0.0005 | - | 0 | 1.83 | 2.71 | Comparative Example |
| 13 | 0.001 | 3.0 | 0.2 | 0.01 | 0.0015 | 0.5 | 0.0010 | 0.0005 | 0.0001 | 0.0001 | 0.0005 | - | 3 | 0.77 | 1.93 | Invention Example |

| No. | Chemical components (mass%) of steel material | | | | | | | | | | | | Magnetic field (T) in sheet thickness direction | Steel sheet properties | | Remarks |
|-----|-----|-----|-----|-----|-----|-----|-----|-----|-----|-----|-----|-----|-----|-----|-----|-----|
| | C | Si | Mn | P | S | Al | N | Ti | Nb | v | O | Others | | Magnetostriction average value $\lambda_{///H}^{ave}$ ($\times 10^{-5}$) | Ring core hysteresis loss $W_{hys}$ (W/kg) | |
| 14 | 0.005 | 3.0 | 1.5 | 0.10 | 0.0015 | 0.5 | 0.0010 | 0.0005 | 0.0001 | 0.0001 | 0.0005 | - | 0 | 1.86 | 2.69 | Comparative Example |
| 15 | 0.005 | 3.0 | 1.5 | 0.10 | 0.0015 | 0.5 | 0.0010 | 0.0005 | 0.0001 | 0.0001 | 0.0005 | - | 3 | 0.79 | 1.87 | Invention Example |
| 16 | 0.001 | 3.0 | 1.5 | 0.12 | 0.0015 | 0.5 | 0.0010 | 0.0005 | 0.0001 | 0.0001 | 0.0005 | - | 0 | 1.84 | 2.66 | Comparative Example |
| 17 | 0.001 | 3.0 | 1.5 | 0.12 | 0.0015 | 0.5 | 0.0010 | 0.0005 | 0.0001 | 0.0001 | 0.0005 | - | 3 | 0.78 | 1.85 | Invention Example |
| 18 | 0.001 | 3.0 | 1.5 | 0.19 | 0.0015 | 0.5 | 0.0010 | 0.0005 | 0.0001 | 0.0001 | 0.0005 | - | 0 | 1.84 | 2.66 | Comparative Example |
| 19 | 0.001 | 3.0 | 1.5 | 0.19 | 0.0015 | 0.5 | 0.0010 | 0.0005 | 0.0001 | 0.0001 | 0.0005 | - | 3 | 0.77 | 1.83 | Invention Example |
| 20 | 0.001 | 3.0 | 1.5 | 0.22 | 0.0015 | 0.5 | 0.0010 | 0.0005 | 0.0001 | 0.0001 | 0.0005 | - | - | - | - | Comparative Example |
| 21 | 0.001 | 3.0 | 1.9 | 0.01 | 0.0015 | 0.5 | 0.0010 | 0.0005 | 0.0001 | 0.0001 | 0.0005 | - | 0 | 1.87 | 2.71 | Comparative Example |
| 22 | 0.001 | 3.0 | 1.9 | 0.01 | 0.0015 | 0.5 | 0.0010 | 0.0005 | 0.0001 | 0.0001 | 0.0005 | - | 3 | 0.80 | 1.93 | Invention Example |
| 23 | 0.001 | 3.0 | 0.5 | 0.01 | 0.0015 | 2.0 | 0.0010 | 0.0005 | 0.0001 | 0.0001 | 0.0005 | - | 0 | 1.89 | 2.78 | Comparative Example |
| 24 | 0.001 | 3.0 | 0.5 | 0.01 | 0.0015 | 2.0 | 0.0010 | 0.0005 | 0.0001 | 0.0001 | 0.0005 | - | 3 | 0.80 | 1.96 | Invention Example |
| 25 | 0.001 | 3.0 | 2.1 | 0.01 | 0.0015 | 0.5 | 0.0010 | 0.0005 | 0.0001 | 0.0001 | 0.0005 | - | 3 | 0.82 | 2.06 | Comparative Example |
| 26 | 0.001 | 3.6 | 0.8 | 0.01 | 0.0015 | 0.01 | 0.0010 | 0.0005 | 0.0001 | 0.0001 | 0.0005 | - | 0 | 1.84 | 2.70 | Comparative Example |

| No. | Chemical components (mass%) of steel material | | | | | | | | | | | | Magnetic field (T) in sheet thickness direction | Steel sheet properties | | Remarks |
| --- | --- | --- | --- | --- | --- | --- | --- | --- | --- | --- | --- | --- | --- | --- | --- | --- |
| | C | Si | Mn | P | S | Al | N | Ti | Nb | v | O | Others | | Magnetostriction average value $\lambda_{///H}{}^{ave}$ ($\times 10^{-5}$) | Ring core hysteresis loss $W_{hys}$ (W/kg) | |
| 27 | 0.001 | 3.6 | 0.8 | 0.01 | 0.0015 | 0.01 | 0.0010 | 0.0005 | 0.0001 | 0.0001 | 0.0005 | - | 3 | 0.78 | 1.86 | Invention Example |

[Table 2-2]

| No. | Chemical components (mass%) of steel material | | | | | | | | | | | | Magnetic field (T) in sheet thickness direction | Steel sheet properties | | Remarks |
|---|---|---|---|---|---|---|---|---|---|---|---|---|---|---|---|---|
| | C | Si | Mn | P | S | Al | N | Ti | Nb | v | O | Others | | Magnetostriction average value $\lambda_{///H}{}^{ave}$ ($\times 10^{-5}$) | Ring core hysteresis loss $W_{hys}$ (W/kg) | |
| 28 | 0.001 | 3.6 | 0.8 | 0.01 | 0.0015 | 0.1 | 0.0010 | 0.0005 | 0.0001 | 0.0001 | 0.0005 | - | 0 | 1.87 | 2.69 | Comparative Example |
| 29 | 0.001 | 3.6 | 0.8 | 0.01 | 0.0015 | 0.1 | 0.0010 | 0.0005 | 0.0001 | 0.0001 | 0.0005 | - | 3 | 0.79 | 1.87 | Invention Example |
| 30 | 0.001 | 3.6 | 0.8 | 0.01 | 0.0015 | 0.8 | 0.0010 | 0.0005 | 0.0001 | 0.0001 | 0.0005 | - | 0 | 1.88 | 2.82 | Comparative Example |
| 31 | 0.001 | 3.6 | 0.8 | 0.01 | 0.0015 | 0.8 | 0.0010 | 0.0005 | 0.0001 | 0.0001 | 0.0005 | - | 3 | 0.82 | 1.92 | Invention Example |
| 32 | 0.001 | 3.6 | 0.8 | 0.01 | 0.0015 | 1.5 | 0.0010 | 0.0005 | 0.0001 | 0.0001 | 0.0005 | - | 3 | 0.85 | 1.96 | Invention Example |
| 33 | 0.001 | 3.6 | 0.8 | 0.01 | 0.0015 | 2.1 | 0.0010 | 0.0005 | 0.0001 | 0.0001 | 0.0005 | - | 3 | 0.88 | 2.14 | Comparative Example |
| 34 | 0.001 | 3.5 | 0.8 | 0.01 | 0.0015 | 0.5 | 0.0010 | 0.0005 | 0.0001 | 0.0001 | 0.0005 | - | 3 | 0.76 | 1.82 | Invention Example |
| 35 | 0.001 | 3.5 | 0.8 | 0.01 | 0.0045 | 0.5 | 0.0010 | 0.0005 | 0.0001 | 0.0001 | 0.0005 | - | 3 | 0.74 | 1.97 | Invention Example |
| 36 | 0.001 | 3.5 | 0.8 | 0.01 | 0.0055 | 0.5 | 0.0010 | 0.0005 | 0.0001 | 0.0001 | 0.0005 | - | 3 | 0.73 | 2.13 | Comparative Example |
| 37 | 0.001 | 3.5 | 0.8 | 0.01 | 0.0015 | 0.5 | 0.0005 | 0.0005 | 0.0001 | 0.0001 | 0.0005 | - | 3 | 0.73 | 1.77 | Invention Example |
| 38 | 0.001 | 3.6 | 0.8 | 0.01 | 0.0015 | 0.5 | 0.0048 | 0.0005 | 0.0001 | 0.0001 | 0.0005 | - | 3 | 0.74 | 1.96 | Invention Example |
| 39 | 0.001 | 3.5 | 0.8 | 0.01 | 0.0015 | 0.5 | 0.0054 | 0.0005 | 0.0001 | 0.0001 | 0.0005 | - | 3 | 0.72 | 2.14 | Comparative Example |
| 40 | 0.001 | 3.7 | 0.8 | 0.01 | 0.0015 | 0.5 | 0.0010 | 0.0001 | 0.0001 | 0.0001 | 0.0005 | - | 3 | 0.73 | 1.79 | Invention Example |

(continued)

| No. | Chemical components (mass%) of steel material | | | | | | | | | | | | Magnetic field (T) in sheet thickness direction | Steel sheet properties | | Remarks |
|---|---|---|---|---|---|---|---|---|---|---|---|---|---|---|---|---|
| | C | Si | Mn | P | S | Al | N | Ti | Nb | v | O | Others | | Magnetostriction average value $\lambda_{///H}^{ave}$ ($\times 10^{-5}$) | Ring core hysteresis loss $W_{hys}$ (W/kg) | |
| 41 | 0.001 | 3.5 | 0.8 | 0.01 | 0.0015 | 0.5 | 0.0010 | 0.0020 | 0.0001 | 0.0001 | 0.0005 | - | 3 | 0.74 | 1.88 | Invention Example |
| 42 | 0.001 | 3.6 | 0.8 | 0.01 | 0.0015 | 0.5 | 0.0010 | 0.0027 | 0.0001 | 0.0001 | 0.0005 | - | 3 | 0.73 | 1.97 | Invention Example |
| 43 | 0.001 | 3.6 | 0.8 | 0.01 | 0.0015 | 0.5 | 0.0010 | 0.0033 | 0.0001 | 0.0001 | 0.0005 | - | 3 | 0.74 | 2.22 | Comparative Example |
| 44 | 0.001 | 3.7 | 0.8 | 0.01 | 0.0015 | 0.5 | 0.0010 | 0.0005 | 0.0005 | 0.0001 | 0.0005 | - | 3 | 0.74 | 1.85 | Invention Example |
| 45 | 0.001 | 3.6 | 0.8 | 0.01 | 0.0015 | 0.5 | 0.0010 | 0.0005 | 0.0008 | 0.0001 | 0.0005 | - | 3 | 0.72 | 1.96 | Invention Example |
| 46 | 0.001 | 3.5 | 0.8 | 0.01 | 0.0015 | 0.5 | 0.0010 | 0.0005 | 0.0013 | 0.0001 | 0.0005 | - | 3 | 0.73 | 2.08 | Comparative Example |
| 47 | 0.001 | 3.5 | 0.8 | 0.01 | 0.0015 | 0.5 | 0.0010 | 0.0005 | 0.0001 | 0.0010 | 0.0005 | - | 3 | 0.74 | 1.88 | Invention Example |
| 48 | 0.001 | 3.5 | 0.8 | 0.01 | 0.0015 | 0.5 | 0.0010 | 0.0005 | 0.0001 | 0.0036 | 0.0005 | - | 3 | 0.73 | 1.85 | Invention Example |
| 49 | 0.001 | 3.6 | 0.8 | 0.01 | 0.0015 | 0.5 | 0.0010 | 0.0005 | 0.0001 | 0.0046 | 0.0005 | - | 3 | 0.71 | 1.98 | Invention Example |
| 50 | 0.001 | 3.5 | 0.8 | 0.01 | 0.0015 | 0.5 | 0.0010 | 0.0005 | 0.0001 | 0.0055 | 0.0005 | - | 3 | 0.73 | 2.12 | Comparative Example |
| 51 | 0.001 | 3.5 | 0.8 | 0.01 | 0.0015 | 0.5 | 0.0010 | 0.0005 | 0.0001 | 0.0001 | 0.0016 | - | 3 | 0.72 | 1.87 | Invention Example |
| 52 | 0.001 | 3.5 | 0.8 | 0.01 | 0.0015 | 0.5 | 0.0010 | 0.0005 | 0.0001 | 0.0001 | 0.0044 | - | 3 | 0.73 | 1.94 | Invention Example |
| 53 | 0.001 | 3.5 | 0.8 | 0.01 | 0.0015 | 0.5 | 0.0010 | 0.0005 | 0.0001 | 0.0001 | 0.0053 | - | 3 | 0.73 | 2.08 | Comparative Example |

[Table 2-3]

| No. | Chemical components (mass%) of steel material | | | | | | | | | | | | Magnetic field (T) in sheet thickness direction | Steel sheet properties | | Remarks |
| | C | Si | Mn | P | S | Al | N | Ti | Nb | v | O | Others | | Magnetostriction average value $\lambda_{///H}{}^{ave}$ ($\times 10^{-5}$) | Ring core hysteresis loss $W_{hys}$ (W/kg) | |
|---|---|---|---|---|---|---|---|---|---|---|---|---|---|---|---|---|
| 54 | 0.001 | 3.5 | 0.8 | 0.01 | 0.0015 | 0.5 | 0.0010 | 0.0005 | 0.0001 | 0.0001 | 0.0005 | Sn:0.004 | 3 | 0.73 | 1.79 | Invention Example |
| 55 | 0.001 | 3.5 | 0.8 | 0.01 | 0.0015 | 0.5 | 0.0010 | 0.0005 | 0.0001 | 0.0001 | 0.0005 | Sn:0.006 | 3 | 0.74 | 1.74 | Invention Example |
| 56 | 0.001 | 3.5 | 0.8 | 0.01 | 0.0015 | 0.5 | 0.0010 | 0.0005 | 0.0001 | 0.0001 | 0.0005 | Sn:0.08 | 3 | 0.73 | 1.72 | Invention Example |
| 57 | 0.001 | 3.5 | 0.8 | 0.01 | 0.0015 | 0.5 | 0.0010 | 0.0005 | 0.0001 | 0.0001 | 0.0005 | Sn:0.18 | 3 | 0.72 | 1.71 | Invention Example |
| 58 | 0.001 | 3.5 | 0.8 | 0.01 | 0.0015 | 0.5 | 0.0010 | 0.0005 | 0.0001 | 0.0001 | 0.0005 | Sb:0.003 | 3 | 0.73 | 1.80 | Invention Example |
| 59 | 0.001 | 3.5 | 0.8 | 0.01 | 0.0015 | 0.5 | 0.0010 | 0.0005 | 0.0001 | 0.0001 | 0.0005 | Sb:0.007 | 3 | 0.74 | 1.73 | Invention Example |
| 60 | 0.001 | 3.5 | 0.8 | 0.01 | 0.0015 | 0.5 | 0.0010 | 0.0005 | 0.0001 | 0.0001 | 0.0005 | Sb:0.12 | 3 | 0.74 | 1.71 | Invention Example |
| 61 | 0.001 | 3.5 | 0.8 | 0.01 | 0.0015 | 0.5 | 0.0010 | 0.0005 | 0.0001 | 0.0001 | 0.0005 | Sb:0.17 | 3 | 0.73 | 1.70 | Invention Example |
| 62 | 0.001 | 3.6 | 0.8 | 0.01 | 0.0015 | 0.5 | 0.0010 | 0.0005 | 0.0001 | 0.0001 | 0.0005 | Ca:0.0003 | 3 | 0.74 | 1.78 | Invention Example |
| 63 | 0.001 | 3.6 | 0.8 | 0.01 | 0.0015 | 0.5 | 0.0010 | 0.0005 | 0.0001 | 0.0001 | 0.0005 | Ca:0.0008 | 3 | 0.73 | 1.74 | Invention Example |
| 64 | 0.001 | 3.6 | 0.8 | 0.01 | 0.0015 | 0.5 | 0.0010 | 0.0005 | 0.0001 | 0.0001 | 0.0005 | Ca:0.0335 | 3 | 0.72 | 1.72 | Invention Example |
| 65 | 0.001 | 3.6 | 0.8 | 0.01 | 0.0015 | 0.5 | 0.0010 | 0.0005 | 0.0001 | 0.0001 | 0.0005 | Ca:0.0805 | 3 | 0.72 | 1.74 | Invention Example |
| 66 | 0.001 | 3.6 | 0.8 | 0.01 | 0.0015 | 0.5 | 0.0010 | 0.0005 | 0.0001 | 0.0001 | 0.0005 | Mg:0.0002 | 3 | 0.73 | 1.77 | Invention Example |

EP 4 685 259 A1

(continued)

| No. | Chemical components (mass%) of steel material | | | | | | | | | | | | Magnetic field (T) in sheet thickness direction | Steel sheet properties | | Remarks |
| | C | Si | Mn | P | S | Al | N | Ti | Nb | V | O | Others | | Magnetostriction average value $\lambda_{//H}^{ave}$ ($\times 10^{-5}$) | Ring core hysteresis loss $W_{hys}$ (W/kg) | |
|---|---|---|---|---|---|---|---|---|---|---|---|---|---|---|---|---|---|
| 67 | 0.001 | 3.6 | 0.8 | 0.01 | 0.0015 | 0.5 | 0.0010 | 0.0005 | 0.0001 | 0.0001 | 0.0005 | Mg:0.0012 | 3 | 0.72 | 1.73 | Invention Example |
| 68 | 0.001 | 3.6 | 0.8 | 0.01 | 0.0015 | 0.5 | 0.0010 | 0.0005 | 0.0001 | 0.0001 | 0.0005 | Mg:0.045 | 3 | 0.73 | 1.71 | Invention Example |
| 69 | 0.001 | 3.6 | 0.8 | 0.01 | 0.0015 | 0.5 | 0.0010 | 0.0005 | 0.0001 | 0.0001 | 0.0005 | Mg:0.083 | 3 | 0.73 | 1.72 | Invention Example |
| 70 | 0.001 | 3.6 | 0.8 | 0.01 | 0.0015 | 0.5 | 0.0010 | 0.0005 | 0.0001 | 0.0001 | 0.0005 | REM:0.0004 | 3 | 0.74 | 1.79 | Invention Example |
| 71 | 0.001 | 3.6 | 0.8 | 0.01 | 0.0015 | 0.5 | 0.0010 | 0.0005 | 0.0001 | 0.0001 | 0.0005 | REM:0.0007 | 3 | 0.72 | 1.74 | Invention Example |
| 72 | 0.001 | 3.6 | 0.8 | 0.01 | 0.0015 | 0.5 | 0.0010 | 0.0005 | 0.0001 | 0.0001 | 0.0005 | REM:0.0432 | 3 | 0.73 | 1.72 | Invention Example |
| 73 | 0.001 | 3.6 | 0.8 | 0.01 | 0.0015 | 0.5 | 0.0010 | 0.0005 | 0.0001 | 0.0001 | 0.0005 | REM:0.0953 | 3 | 0.74 | 1.73 | Invention Example |
| 74 | 0.001 | 3.6 | 0.8 | 0.01 | 0.0015 | 0.5 | 0.0010 | 0.0005 | 0.0001 | 0.0001 | 0.0005 | Cr:0.015 | 3 | 0.73 | 1.81 | Invention Example |
| 75 | 0.001 | 3.6 | 0.8 | 0.01 | 0.0015 | 0.5 | 0.0010 | 0.0005 | 0.0001 | 0.0001 | 0.0005 | Cr:0.54 | 3 | 0.73 | 1.80 | Invention Example |
| 76 | 0.001 | 3.6 | 0.8 | 0.01 | 0.0015 | 0.5 | 0.0010 | 0.0005 | 0.0001 | 0.0001 | 0.0005 | Cr:0.95 | 3 | 0.72 | 1.81 | Invention Example |
| 77 | 0.001 | 3.6 | 0.8 | 0.01 | 0.0015 | 0.5 | 0.0010 | 0.0005 | 0.0001 | 0.0001 | 0.0005 | Cu:0.014 | 3 | 0.73 | 1.81 | Invention Example |
| 78 | 0.001 | 3.6 | 0.8 | 0.01 | 0.0015 | 0.5 | 0.0010 | 0.0005 | 0.0001 | 0.0001 | 0.0005 | Cu:0.64 | 3 | 0.72 | 1.80 | Invention Example |
| 79 | 0.001 | 3.6 | 0.8 | 0.01 | 0.0015 | 0.5 | 0.0010 | 0.0005 | 0.0001 | 0.0001 | 0.0005 | Cu:0.86 | 3 | 0.74 | 1.81 | Invention Example |

[Table 2-4]

| No. | Chemical components (mass%) of steel material | | | | | | | | | | | | Magnetic field (T) in sheet thickness direction | Steel sheet properties | | Remarks |
| | C | Si | Mn | P | S | Al | N | Ti | Nb | v | O | Others | | Magnetostriction average value $\lambda_{///H}{}^{ave}$ ($\times 10^{-5}$) | Ring core hysteresis loss $W_{hys}$ (W/kg) | |
|---|---|---|---|---|---|---|---|---|---|---|---|---|---|---|---|---|
| 80 | 0.001 | 3.6 | 0.8 | 0.01 | 0.0015 | 0.5 | 0.0010 | 0.0005 | 0.0001 | 0.0001 | 0.0005 | Ni:0.021 | 3 | 0.73 | 1.81 | Invention Example |
| 81 | 0.001 | 3.6 | 0.8 | 0.01 | 0.0015 | 0.5 | 0.0010 | 0.0005 | 0.0001 | 0.0001 | 0.0005 | Ni:0.165 | 3 | 0.74 | 1.80 | Invention Example |
| 82 | 0.001 | 3.6 | 0.8 | 0.01 | 0.0015 | 0.5 | 0.0010 | 0.0005 | 0.0001 | 0.0001 | 0.0005 | Ni:0.92 | 3 | 0.73 | 1.82 | Invention Example |
| 83 | 0.001 | 3.6 | 0.8 | 0.01 | 0.0015 | 0.5 | 0.0010 | 0.0005 | 0.0001 | 0.0001 | 0.0005 | Mo:0.0008 | 3 | 0.73 | 1.74 | Invention Example |
| 84 | 0.001 | 3.6 | 0.8 | 0.01 | 0.0015 | 0.5 | 0.0010 | 0.0005 | 0.0001 | 0.0001 | 0.0005 | Mo:0.012 | 3 | 0.74 | 1.72 | Invention Example |
| 85 | 0.001 | 3.6 | 0.8 | 0.01 | 0.0015 | 0.5 | 0.0010 | 0.0005 | 0.0001 | 0.0001 | 0.0005 | Mo:0.0942 | 3 | 0.73 | 1.74 | Invention Example |
| 86 | 0.001 | 3.6 | 0.8 | 0.01 | 0.0015 | 0.5 | 0.0010 | 0.0005 | 0.0001 | 0.0001 | 0.0005 | W:0.0016 | 3 | 0.72 | 1.73 | Invention Example |
| 87 | 0.001 | 3.6 | 0.8 | 0.01 | 0.0015 | 0.5 | 0.0010 | 0.0005 | 0.0001 | 0.0001 | 0.0005 | W:0.034 | 3 | 0.72 | 1.72 | Invention Example |
| 88 | 0.001 | 3.6 | 0.8 | 0.01 | 0.0015 | 0.5 | 0.0010 | 0.0005 | 0.0001 | 0.0001 | 0.0005 | W:0.0965 | 3 | 0.74 | 1.74 | Invention Example |
| 89 | 0.001 | 3.6 | 0.8 | 0.01 | 0.0015 | 0.5 | 0.0010 | 0.0005 | 0.0001 | 0.0001 | 0.0005 | Co:0.0121 | 3 | 0.73 | 1.73 | Invention Example |
| 90 | 0.001 | 3.6 | 0.8 | 0.01 | 0.0015 | 0.5 | 0.0010 | 0.0005 | 0.0001 | 0.0001 | 0.0005 | Co:0.268 | 3 | 0.74 | 1.69 | Invention Example |
| 91 | 0.001 | 3.6 | 0.8 | 0.01 | 0.0015 | 0.5 | 0.0010 | 0.0005 | 0.0001 | 0.0001 | 0.0005 | Co:0.971 | 3 | 0.73 | 1.67 | Invention Example |
| 92 | 0.001 | 3.6 | 0.8 | 0.01 | 0.0015 | 0.5 | 0.0010 | 0.0005 | 0.0001 | 0.0001 | 0.0005 | As:0.0014 | 3 | 0.72 | 1.74 | Invention Example |

| No. | Chemical components (mass%) of steel material | | | | | | | | | | | | Magnetic field (T) in sheet thickness direction | Steel sheet properties | | Remarks |
| | C | Si | Mn | P | S | Al | N | Ti | Nb | v | O | Others | | Magnetostriction average value $\lambda_{///H}{}^{ave}$ ($\times 10^{-5}$) | Ring core hysteresis loss $W_{hys}$ (W/kg) | |
|---|---|---|---|---|---|---|---|---|---|---|---|---|---|---|---|---|
| 93 | 0.001 | 3.6 | 0.8 | 0.01 | 0.0015 | 0.5 | 0.0010 | 0.0005 | 0.0001 | 0.0001 | 0.0005 | As:0.0156 | 3 | 0.74 | 1.71 | Invention Example |
| 94 | 0.001 | 3.6 | 0.8 | 0.01 | 0.0015 | 0.5 | 0.0010 | 0.0005 | 0.0001 | 0.0001 | 0.0005 | As:0.0468 | 3 | 0.73 | 1.70 | Invention Example |
| 95 | 0.001 | 3.6 | 0.8 | 0.01 | 0.0015 | 0.5 | 0.0010 | 0.0005 | 0.0001 | 0.0001 | 0.0005 | B:0.0003 | 3 | 0.73 | 1.73 | Invention Example |
| 96 | 0.001 | 3.6 | 0.8 | 0.01 | 0.0015 | 0.5 | 0.0010 | 0.0005 | 0.0001 | 0.0001 | 0.0005 | B:0.0035 | 3 | 0.74 | 1.68 | Invention Example |
| 97 | 0.001 | 3.6 | 0.8 | 0.01 | 0.0015 | 0.5 | 0.0010 | 0.0005 | 0.0001 | 0.0001 | 0.0005 | B:0.0047 | 3 | 0.72 | 1.66 | Invention Example |
| 98 | 0.001 | 3.6 | 0.8 | 0.01 | 0.0015 | 0.5 | 0.0010 | 0.0005 | 0.0001 | 0.0001 | 0.0005 | Pb:0.00002 | 3 | 0.75 | 1.71 | Invention Example |
| 99 | 0.001 | 3.6 | 0.8 | 0.01 | 0.0015 | 0.5 | 0.0010 | 0.0005 | 0.0001 | 0.0001 | 0.0005 | Pb:0.0003 | 3 | 0.73 | 1.76 | Invention Example |
| 100 | 0.001 | 3.6 | 0.8 | 0.01 | 0.0015 | 0.5 | 0.0010 | 0.0005 | 0.0001 | 0.0001 | 0.0005 | Pb:0.0095 | 3 | 0.74 | 1.83 | Invention Example |
| 101 | 0.001 | 3.6 | 0.8 | 0.01 | 0.0015 | 0.5 | 0.0010 | 0.0005 | 0.0001 | 0.0001 | 0.0005 | Zn:0.0002 | 3 | 0.73 | 1.73 | Invention Example |
| 102 | 0.001 | 3.6 | 0.8 | 0.01 | 0.0015 | 0.5 | 0.0010 | 0.0005 | 0.0001 | 0.0001 | 0.0005 | Zn:0.003 | 3 | 0.75 | 1.72 | Invention Example |
| 103 | 0.001 | 3.6 | 0.8 | 0.01 | 0.0015 | 0.5 | 0.0010 | 0.0005 | 0.0001 | 0.0001 | 0.0005 | Zn:0.018 | 3 | 0.74 | 1.71 | Invention Example |

[Table 2-5]

| No. | Chemical components (mass%) of steel material | | | | | | | | | | | | Magnetic field (T) in sheet thickness direction | Steel sheet properties | | Remarks |
|---|---|---|---|---|---|---|---|---|---|---|---|---|---|---|---|---|
| | C | Si | Mn | P | S | Al | N | Ti | Nb | V | O | Others | | Magnetostriction average value $\lambda_{///H}{}^{ave}$ ($\times 10^{-5}$) | Ring core hysteresis loss $W_{hys}$ (W/kg) | |
| 104 | 0.001 | 3.6 | 0.8 | 0.01 | 0.0015 | 0.5 | 0.001 | 0.0005 | 0.0001 | 0.0001 | 0.0005 | Zr:0.0026 | 3 | 0.75 | 1.76 | Invention Example |
| 105 | 0.001 | 3.6 | 0.8 | 0.01 | 0.0015 | 0.5 | 0.001 | 0.0005 | 0.0001 | 0.0001 | 0.0005 | Zr:0.0048 | 3 | 0.76 | 1.79 | Invention Example |
| 106 | 0.001 | 3.6 | 0.8 | 0.01 | 0.0015 | 0.5 | 0.001 | 0.0005 | 0.0001 | 0.0001 | 0.0005 | Ta:0.0009 | 3 | 0.74 | 1.75 | Invention Example |
| 107 | 0.001 | 3.6 | 0.8 | 0.01 | 0.0015 | 0.5 | 0.001 | 0.0005 | 0.0001 | 0.0001 | 0.0005 | Ta:0.0018 | 3 | 0.72 | 1.79 | Invention Example |
| 108 | 0.001 | 3.6 | 0.8 | 0.01 | 0.0015 | 0.5 | 0.001 | 0.0005 | 0.0001 | 0.0001 | 0.0005 | Se:0.0028 | 3 | 0.78 | 1.78 | Invention Example |
| 109 | 0.001 | 3.6 | 0.8 | 0.01 | 0.0015 | 0.5 | 0.001 | 0.0005 | 0.0001 | 0.0001 | 0.0005 | Se:0.0049 | 3 | 0.77 | 1.82 | Invention Example |
| 110 | 0.001 | 3.6 | 0.8 | 0.01 | 0.0015 | 0.5 | 0.001 | 0.0005 | 0.0001 | 0.0001 | 0.0005 | Bi:0.0009 | 3 | 0.76 | 1.77 | Invention Example |
| 111 | 0.001 | 3.6 | 0.8 | 0.01 | 0.0015 | 0.5 | 0.001 | 0.0005 | 0.0001 | 0.0001 | 0.0005 | Bi:0.0018 | 3 | 0.77 | 1.81 | Invention Example |
| 112 | 0.001 | 3.6 | 0.8 | 0.01 | 0.0015 | 0.5 | 0.001 | 0.0005 | 0.0001 | 0.0001 | 0.0005 | Ge:0.0007 | 3 | 0.73 | 1.70 | Invention Example |
| 113 | 0.001 | 3.6 | 0.8 | 0.01 | 0.0015 | 0.5 | 0.001 | 0.0005 | 0.0001 | 0.0001 | 0.0005 | Ge:0.028 | 3 | 0.72 | 1.68 | Invention Example |
| 114 | 0.001 | 3.6 | 0.8 | 0.01 | 0.0015 | 0.5 | 0.001 | 0.0005 | 0.0001 | 0.0001 | 0.0005 | Ga:0.009 | 3 | 0.73 | 1.69 | Invention Example |
| 115 | 0.001 | 3.6 | 0.8 | 0.01 | 0.0015 | 0.5 | 0.001 | 0.0005 | 0.0001 | 0.0001 | 0.0005 | Ga:0.027 | 3 | 0.71 | 1.66 | Invention Example |
| 116 | 0.001 | 3.6 | 0.8 | 0.01 | 0.0015 | 0.5 | 0.001 | 0.0005 | 0.0001 | 0.0001 | 0.0005 | Sn:0.01 Ca:0.0003 | 3 | 0.74 | 1.77 | Invention Example |

(continued)

| No. | Chemical components (mass%) of steel material | | | | | | | | | | | | Magnetic field (T) in sheet thickness direction | Steel sheet properties | | Remarks |
| | C | Si | Mn | P | S | Al | N | Ti | Nb | V | O | Others | | Magnetostriction average value $\lambda_{///H}^{ave}$ ($\times 10^{-5}$) | Ring core hysteresis loss $W_{hys}$ (W/kg) | |
|---|---|---|---|---|---|---|---|---|---|---|---|---|---|---|---|---|
| 117 | 0.001 | 3.6 | 0.8 | 0.01 | 0.0015 | 0.5 | 0.001 | 0.0005 | 0.0001 | 0.0001 | 0.0005 | Cu:0.2 Ni:0.1 | 3 | 0.73 | 1.74 | Invention Example |
| 118 | 0.001 | 3.6 | 0.8 | 0.01 | 0.0015 | 0.5 | 0.001 | 0.0005 | 0.0001 | 0.0001 | 0.0005 | W:0.005 Co:0.100 | 3 | 0.73 | 1.73 | Invention Example |
| 119 | 0.001 | 3.6 | 0.8 | 0.01 | 0.0015 | 0.5 | 0.001 | 0.0005 | 0.0001 | 0.0001 | 0.0005 | As:0.005 Pb:0.0002 | 3 | 0.75 | 1.69 | Invention Example |
| 120 | 0.001 | 3.6 | 0.8 | 0.01 | 0.0015 | 0.5 | 0.001 | 0.0005 | 0.0001 | 0.0001 | 0.0005 | Zn:0.005 Ta:0.0005 | 3 | 0.72 | 1.74 | Invention Example |
| 121 | 0.001 | 3.6 | 0.8 | 0.01 | 0.0015 | 0.5 | 0.001 | 0.0005 | 0.0001 | 0.0001 | 0.0005 | Zr:0.0050 Ge:0.0040 | 3 | 0.75 | 1.71 | Invention Example |

[Table 2-6]

| No. | Chemical components (mass%) of steel material | | | | | | | | | | | | Magnetic field (T) in sheet thickness direction | Steel sheet properties | | Remarks |
| | C | Si | Mn | P | S | Al | N | Ti | Nb | v | O | Others | | Magnetostriction average value $\lambda_{///H}{}^{ave}$ ($\times 10^{-5}$) | Ring core hysteresis loss $W_{hys}$ (W/kg) | |
|---|---|---|---|---|---|---|---|---|---|---|---|---|---|---|---|---|
| 122 | 0.001 | 3.6 | 0.8 | 0.01 | 0.0015 | 0.5 | 0.001 | 0.0005 | 0.0001 | 0.0001 | 0.0005 | Sb:0.02 Cr:0.05 Mo:0.03 | 3 | 0.73 | 1.73 | Invention Example |
| 123 | 0.001 | 3.6 | 0.8 | 0.01 | 0.0015 | 0.5 | 0.001 | 0.0005 | 0.0001 | 0.0001 | 0.0005 | REM:0.003 Ni:0.08 B:0.0010 | 3 | 0.72 | 1.74 | Invention Example |
| 124 | 0.001 | 3.6 | 0.8 | 0.01 | 0.0015 | 0.5 | 0.001 | 0.0005 | 0.0001 | 0.0001 | 0.0005 | Pb:0.0005 Zn:0.0050 Ga:0.0050 | 3 | 0.75 | 1.73 | Invention Example |
| 125 | 0.001 | 3.6 | 0.8 | 0.01 | 0.0015 | 0.5 | 0.001 | 0.0005 | 0.0001 | 0.0001 | 0.0005 | Sn:0.05 REM:0.0030 Cu:0.13 Ni:0.05 Mo:0.020 Co:0.03 As:0.0050 Pb:0.0002 Zn:0.0030 Ta:0.0005 Zr:0.0010 Ge:0.0010 | 3 | 0.74 | 1.77 | Invention Example |

EP 4 685 259 A1

Example 3

Steel having a chemical composition containing C: 0.0015 mass%, Si: 3.4 mass%, Mn: 0.7 mass%, P: 0.020 mass%, S: 0.0005 mass%, Al: 1.0 mass%, N: 0.0020 mass%, Ti: 0.0020 mass%, Nb: 0.0001 mass%, V: 0.0002 mass%, O: 0.0010 mass%, Sn: 0.01 mass%, Cu: 0.05 mass%, Ni: 0.05 mass%, Cr: 0.02 mass, Mo: 0.02 mass%, B: 0.0003 mass%, Pb: 0.0001 mass%, As: 0.0003 mass%, Zn: 0.0020 mass%, Co: 0.0030 mass%, and Ga: 0.0030 mass% was smelted using an electrical furnace. The steel was then cast into a 100 mm-thick thin slab, which was then hot-rolled into a hot-rolled sheet with a sheet thickness of 0.8 mm, using a thin-slab continuous caster having a continuous casting facility and a hot-rolling facility directly coupled to each other. The hot-rolled sheet was subjected to hot-rolled sheet annealing of 1000°C×30s, pickled, and cold-rolled into a cold-rolled sheet with a final sheet thickness of 0.25 mm. This cold-rolled sheet was rapidly heated through a temperature region of 200°C to 700°C at an average heating rate of 1000°C/s, and in this temperature region, a direct-current magnetic field of 5 T was applied in the sheet thickness direction. Thereafter, the steel sheet was heated from 700°C to 1000°C, without being cooled, and subjected to finishing annealing of 1000°C×10s, and then an insulation coating was formed thereon to obtain a product sheet.

From the product sheet thus obtained, test pieces having a ring shape with an outside diameter of 80 mm and an inside diameter of 60 mm and having notches at eight positions in the ring outer circumference as shown in Fig. 1 were punched out. Then, 100 sheets of the test pieces were laminated in the sheet thickness direction and fixed at six positions by welding to produce a ring core. Next, this ring core was shrink-fitted into an aluminum-alloy case having a thickness of 3 mm and an inside diameter of 80 mm, with a shrink-fit allowance of 30 $\mu$m. Thereafter, a primary winding and a secondary winding were wound around the shrink-fitted ring core as shown in Fig. 1, and then the hysteresis loss $W_{hys}$ when exciting the ring core at a frequency of 50 Hz and a maximum magnetic flux density $B_m$ of 1.5 T was measured. Having hysteresis loss $W_{hys}$ of 2.00 W/Kg or smaller was evaluated as having favorable iron loss.

Furthermore, rectangular test pieces measuring 30 mm wide by 280 mm long were cut out from the product sheet such that the rolling direction, the sheet width direction, and the direction at 45° from the rolling direction constituted the respective length directions, and an alternating-current magnetic field with a frequency of 50 Hz and a maximum magnetic flux density $B_m$ of 1.5 T was applied in the length directions of the test pieces. The zero-peak values $\lambda_{//H}^{RD}$, $\lambda_{//H}^{TD}$ and $\lambda_{//H}^{DD}$ of the resulting magnetostrictions in the directions parallel to the respective magnetic field directions were measured using a laser Doppler vibrometer, and the magnetostriction in-plane average value $\lambda_{//H}^{ave}$ was obtained by the following Formula (1):

$$\lambda_{//H}^{ave} = \frac{\lambda_{//H}^{RD} + 2\lambda_{//H}^{DD} + \lambda_{//H}^{TD}}{4} \quad \cdots \quad (1)$$

The result of this measurement is shown in Table 3. From this table, it can be seen that the ring core produced using a non-oriented electrical steel sheet manufactured using a steel material having a chemical composition complying with the present invention and under conditions complying with the present invention has excellent iron loss property.

[Table 3]

| Magnetostriction average value $\lambda_{//H}^{ave}$ ($\times 10^{-5}$) | Ring core hysteresis loss $W_{hys}$ (W/kg) |
|---|---|
| 0.79 | 1.89 |

**Claims**

1. A non-oriented electrical steel sheet having a chemical composition containing C: 0.0050 mass% or less, Si: 2.0 to 5.0 mass%, Mn: 2.0 mass% or less, P: 0.20 mass% or less, S: 0.0050 mass% or less, Al: 2.0 mass% or less, N: 0.0050 mass% or less, Ti: 0.0030 mass% or less, Nb: 0.0010 mass% or less, V: 0.0050 mass% or less, and O: 0.0050 mass% or less, with the balance being Fe and unavoidable impurities,
   **characterized in that**
   when an alternating-current magnetic field with a frequency of 50 Hz and a maximum magnetic flux density $B_m$ of 1.5 T is applied in a rolling direction ($^{RD}$), a sheet width direction ($^{TD}$), and a direction ($^{DD}$) forming an angle of 45° with the rolling direction, in a rolling plane of the steel sheet, and zero-peak values of resulting magnetostrictions in directions parallel to the respective magnetic field directions are represented as $\lambda_{//H}^{RD}$, $\lambda_{//H}^{TD}$, and $\lambda_{//H}^{DD}$, respectively, a

24

magnetostriction in-plane average value $\lambda_{//H}^{ave}$ defined by the following Formula (1) is $1.0\times10^{-5}$ or smaller.

$$\lambda_{//H}^{ave} = \frac{\lambda_{//H}^{RD} + 2\lambda_{//H}^{DD} + \lambda_{//H}^{TD}}{4} \quad \cdots \quad (1)$$

2. The non-oriented electrical steel sheet according to claim 1, wherein
   the non-oriented electrical steel sheet further contains, in addition to the chemical composition, a component of at least one group among the following groups A to L:

   - Group A; at least one type selected from Sn: 0.005 to 0.20 mass% and Sb: 0.005 to 0.20 mass%
   - Group B; at least one type selected from Ca: 0.0005 to 0.100 mass%, Mg: 0.0005 to 0.100 mass%, and REM: 0.0005 to 0.100 mass%
   - Group C; at least one type selected from Cr: 0.01 to 1.0 mass% and Cu: 0.01 to 1.0 mass%
   - Group D; Ni: 0.01 to 1.0 mass%
   - Group E; at least one type selected from Mo: 0.0005 to 0.1 mass% and W: 0.001 to 0.1 mass%
   - Group F; Co: 0.01 to 1.0 mass%
   - Group G; at least one type selected from As: 0.001 to 0.05 mass% and B: 0.0001 to 0.005 mass%
   - Group H; Pb: 0.00001 to 0.010 mass%
   - Group I; Zn: 0.0001 to 0.02 mass%
   - Group J; Ta: 0 to 0.0020 mass%
   - Group K; at least one type selected from Zr: 0 to 0.0050 mass%, Se: 0 to 0.0050 mass%, and Bi: 0 to 0.0020 mass%
   - Group L; at least one type selected from Ge: 0 to 0.030 mass% and Ga: 0 to 0.030 mass%.

[Fig. 1]

Case

Ring Core

Notch

Primary Winding

Secondary Winding

[Fig. 2]

[Fig. 3]

## INTERNATIONAL SEARCH REPORT

| International application No. |
| --- |
| **PCT/JP2024/004239** |

| A. | CLASSIFICATION OF SUBJECT MATTER |
| --- | --- |

*C22C 38/00*(2006.01)i; *C21D 8/12*(2006.01)i; *C21D 9/46*(2006.01)i; *C22C 38/14*(2006.01)i; *C22C 38/60*(2006.01)i; *H01F 1/147*(2006.01)i; *H02K 1/02*(2006.01)i
FI:  C22C38/00 303U; C22C38/14; C22C38/60; H02K1/02 Z; H01F1/147 175; C21D8/12 A; C21D9/46 501A

According to International Patent Classification (IPC) or to both national classification and IPC

| B. | FIELDS SEARCHED |
| --- | --- |

Minimum documentation searched (classification system followed by classification symbols)

C22C38/00; C21D8/12; C21D9/46; C22C38/14; C22C38/60; H01F1/147; H02K1/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2003-231922 A (SUMITOMO METAL INDUSTRIES, LTD.) 19 August 2003 (2003-08-19) claims, paragraphs [0018], [0035], [0064], [0069]-[0075] | 1-2 |
| A | WO 2020/090160 A1 (JFE STEEL CORPORATION) 07 May 2020 (2020-05-07) entire text | 1-2 |
| A | WO 2018/179871 A1 (JFE STEEL CORPORATION) 04 October 2018 (2018-10-04) entire text | 1-2 |
| A | JP 2001-181803 A (KAWASAKI STEEL CORP.) 03 July 2001 (2001-07-03) entire text | 1-2 |
| A | JP 7-197132 A (NKK CORP.) 01 August 1995 (1995-08-01) entire text, all drawings | 1-2 |

| ☐ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 April 2024** | **23 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/004239**

| Patent document cited in search report | | | Publication date (day/month/year) | Patent family member(s) | | Publication date (day/month/year) |
|---|---|---|---|---|---|---|
| JP | 2003-231922 | A | 19 August 2003 | (Family: none) | | |
| WO | 2020/090160 | A1 | 07 May 2020 | US 2021/0371948 entire text | A1 | |
| | | | | US 2023/0065674 | A1 | |
| | | | | EP 3859032 | A1 | |
| | | | | KR 10-2021-0056391 | A | |
| | | | | CN 112930412 | A | |
| WO | 2018/179871 | A1 | 04 October 2018 | US 2019/0382867 entire text | A1 | |
| | | | | EP 3572535 | A1 | |
| | | | | CN 110536971 | A | |
| | | | | KR 10-2019-0118611 | A | |
| JP | 2001-181803 | A | 03 July 2001 | US 6562473 entire text | B1 | |
| | | | | EP 1108794 | A1 | |
| | | | | KR 10-2001-0062073 | A | |
| | | | | CN 1308143 | A | |
| JP | 7-197132 | A | 01 August 1995 | (Family: none) | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010248559 A

- WO 2018179871 A